# FASCICULE DE BREVET EUROPEEN

(11) **EP 3 137 854 B1**
(45) Date de publication et mention de la délivrance du brevet: **17.10.2018**
(21) Numéro de dépôt: 15719791.4
(22) Date de dépôt: 02.04.2015
(51) Int. Cl.: G01D 5/353, G01D 5/26, G01D 5/30, F21V 8/00, F16C 41/00, F16C 29/06

(54) **PROCEDE DE TRANSMISSION D'INFORMATIONS DEPUIS UN EQUIPAGE MOBILE LE LONG D'UNE TRAJECTOIRE FIXE, DISPOSITIF DE TRANSMISSION ET INSTALLATION ASSOCIES**
VERFAHREN ZUM ÜBERMITTELN VON INFORMATIONEN VON EINER MOBILEN VORRICHTUNG ENTLANG EINES FESTEN WEGES, ZUGEHÖRIGE ÜBERTRAGUNGSVORRICHTUNG UND ANLAGE
METHOD FOR TRANSMITTING INFORMATION FROM A MOBILE RIG ALONG A FIXED PATH, ASSOCIATED TRANSMISSION DEVICE AND FACILITY

(30) Priorité: 04.04.2014 FR 1453001; 06.10.2014 FR 1459574
(43) Date de publication de la demande: 08.03.2017
(73) Titulaire: NTN-SNR Roulements, 74010 Annecy (FR)
(72) Inventeur: DURET, Christophe, 74290 Bluffy (FR); LINDEMANN, Ralf, 32429 Minden (DE); MATHIEU, Jérôme, 74960 Cran-Gevrier (FR); VANDAMME, Etienne, 74600 Seynod (FR)
(74) Mandataire: Alatis
(86) Numéro de dépôt international: PCT/FR2015/050864
(87) Numéro de publication internationale: WO 2015/150708

(56) Documents cités:
- WO-A1-97/27026
- CA-A1- 2 422 341
- CN-A- 101 718 959
- DE-A1-102006 056 803
- GB-A- 2 184 539
- US-A- 5 509 505
- US-A- 5 789 892
- US-A- 5 945 824
- US-A1- 2005 184 597
- US-B1- 6 333 628
- US-B1- 6 965 709
- LAGUESSE M F: "OPTICAL POTENTIOMETER USING FLUORESCENT OPTICAL FIBER FOR POSITION MEASUREMENT", APPLIED OPTICS, OPTICAL SOCIETY OF AMERICA, WASHINGTON, DC; US, vol. 28, no. 23, 1 décembre 1989 (1989-12-01), pages 5144-5148, XP000081093, ISSN: 0003-6935, DOI: 10.1364/AO.28.005144

## Description

### DOMAINE TECHNIQUE DE L'INVENTION

L'invention se rapporte à la transmission d'informations depuis un équipage mobile sur une voie de guidage vers un récepteur fixe distant. Elle se rapporte également à un système de guidage linéaire instrumenté, à un ou plusieurs axes, permettant la transmission d'informations, et notamment d'informations de position, depuis un équipage mobile sur une voie de guidage vers un récepteur fixe distant.

### ÉTAT DE LA TECHNIQUE ANTÉRIEURE

Pour connaître la position d'un chariot d'un système de guidage linéaire guidé par un rail de guidage, on fait généralement appel à un capteur optique ou magnétique positionné sur le chariot à distance d'entrefer d'une piste d'un codeur optique ou magnétique positionné le long de la trajectoire définie par le rail, et on transmet le signal obtenu à un récepteur fixe par l'intermédiaire d'un câble de transmission, comme illustré par exemple dans le document US 6,333,628. Le câble et la connectique associée sont sources de pannes, par exemple par fatigue et rupture. De plus, le câble est encombrant et nécessite des systèmes de guidage.

La transmission par radiofréquence par un émetteur positionné sur le chariot vers un récepteur distant est possible, mais se heurte à des difficultés en milieu industriel perturbé par des sources électromagnétiques multiples. Elle trouve également des limites en termes de bande passante lorsque l'on souhaite une transmission en temps réel de la position précise d'un chariot se déplaçant à grande vitesse sur le rail de guidage.

La transmission par laser entre une source de lumière cohérente positionnée sur le chariot et une cible portant un récepteur photosensible permet de s'affranchir des perturbations électromagnétiques environnantes, mais n'est en pratique envisageable que si l'on est assuré que le rayon lumineux émis par la source cohérente atteindra sa cible, ce qui limite cette technologie à des systèmes de guidages rectilinéaires très précis, dont le rail n'est pas susceptible de se déformer sous les contraintes mécaniques ou thermiques du milieu ambiant, et dont le chariot n'est pas susceptible d'être perturbé par des vibrations, afin que les déviations transversales restent négligeables.

Dans le document US 6 965 709 est proposé un dispositif de mesure de position faisant appel à une fibre photoluminescente excitée par une source modulée. L'atténuation du signal réémis par la fibre photoluminescente depuis le point d'émission le long de la fibre permet de déterminer la distance entre le point d'excitation et un récepteur photosensible situé à l'extrémité de la fibre. Ce dispositif nécessite un récepteur photosensible et des moyens de calculs sophistiqués pour mesurer l'atténuation du signal lumineux et en déduire la position du point d'émission.

Dans le document US 5 509 505 est décrit un dispositif pour détecter la position d'une cabine d'ascenseur dans une cage d'ascenseur. Une source lumineuse d'excitation solidaire de la cage d'ascenseur illumine une fibre photoluminescente. On détecte aux deux extrémités de la fibre photoluminescente la réception du signal lumineux réémis par la fibre. La comparaison des signaux détectés permet de déterminer la position de la source lumineuse d'excitation, donc de la cage d'ascenseur.

Dans le document GB 2 184 539 sont décrits divers dispositifs permettant de connaître le positionnement variable d'une source lumineuse d'excitation mobile le long d'un conducteur optique contenant un matériau fluorescent, et illuminant le conducteur optique, en mesurant l'atténuation du signal émis par le matériau fluorescent dans la fibre. Un principe de mesure similaire est divulgué dans l'article « Optical potentiometer using fluorescent optical fiber for position measurement », par Michel F. Laguesse et publié dans Applied Optics 28(1989), 1 December, nO23, New York, US, p. 5144-5148.

Dans le document US 6 043 916 est décrit un système de transmission de signaux le long d'une trajectoire circulaire, appliqué à un appareillage médical, et plus spécifiquement à un appareillage de tomographie assistée par ordinateur. Un support annulaire rotatif entourant une table d'auscultation où se trouve un patient et destiné à tourner autour d'un axe parallèle à la table est équipé de matériel de mesure ainsi que d'une source lumineuse d'excitation, qui vient exciter une fibre photoluminescente circulaire. La source lumineuse envoie des signaux optiques d'excitation représentant des données de mesure. La fibre photoluminescente émet un signal lumineux secondaire fonction du signal d'excitation, qui chemine le long de la fibre et est détecté par un détecteur fixe disposé à une extrémité de la fibre. Ce système n'est pas utilisé pour détecter la position angulaire de la source lumineuse.

### EXPOSÉ DE L'INVENTION

L'invention vise à remédier aux inconvénients de l'état de la technique et à proposer des moyens de communication d'information de position depuis un équipage mobile le long d'une trajectoire prédéterminée fixe dans un référentiel prédéterminé galiléen ou non, vers un récepteur fixe dans ce référentiel, qui soit robuste dans un milieu perturbé en ondes électromagnétiques, soit adapté à des trajectoires rectilinéaires imprécises, et présente une bande passante élevée.

Pour ce faire est proposé, selon un premier aspect de l'invention, un procédé de transmission d'informations de position depuis un équipage mobile guidé le long d'une trajectoire rectilinéaire prédéterminée fixe dans un référentiel donné, suivant lequel on acquiert un signal de position de l'équipage mobile avec un capteur de position solidaire de l'équipage mobile lisant une information sur un codeur positionné le long de la trajectoire fixe prédéterminée, et on émet un signal lumineux d'excitation contenant une information de position de l'équipage mobile, fonction du signal de position de l'équipage mobile, depuis une source lumineuse associée à l'équipage mobile de manière à exciter transversalement une fibre photoluminescente disposée le long de la trajectoire, et l'on réceptionne à l'aide d'au moins une cellule photosensible au moins un signal lumineux secondaire, émis par la fibre optique photoluminescente excitée par le signal lumineux d'excitation, et guidé dans la fibre optique.

Le signal d'excitation contient une information de position de l'équipage mobile, fonction d'un signal de position obtenu par un capteur de position positionné sur l'équipage mobile, lisant une information sur un codeur positionné le long de la trajectoire. On peut ainsi faire varier le signal d'excitation en fonction du signal de position. Si le signal d'excitation est numérique, on fera ainsi varier le contenu numérique de ce signal, en fonction du signal de position du capteur de position. On peut également transmettre par la même voie d'autres types de signaux relatifs à des variables d'état mesurées sur l'équipage mobile.

Par fibre photoluminescente, on entend ici une fibre optique dopée en pigments photoluminescents, et de préférence fluorescents. Le temps de latence entre l'absorption photonique par la fibre photoluminescente et l'émission photonique secondaire au sein de la fibre peut être extrêmement court, ce qui garantit un temps de réponse très court. Le procédé est peu sensible au positionnement relatif de la source lumineuse d'excitation et de la fibre optique photoluminescente. Ceci permet une mise en oeuvre dans des conditions où un positionnement précis est difficile à garantir, que ce soit pour des raisons de vibration de l'équipage mobile ou de déformation de la voie de guidage définissant la trajectoire. En pratique, la photoluminescence se produit avec un décalage de longueur d'onde, de sorte que la lumière émise par effet photoluminescent n'est pas ou peu réabsorbée par la fibre.

Le référentiel donné peut lui-même être un référentiel galiléen, ou un référentiel ayant des accélérations et décélérations suivant une trajectoire qui lui est propre. En d'autres termes, le procédé est adapté à un équipage mobile suivant un degré de liberté unique, ou suivant plusieurs degrés de libertés.

Le procédé est particulièrement adapté à la transmission de signaux numériques. On prendra ainsi soin de choisir une technique de modulation, de préférence numérique, et un codage garantissant un équilibre des motifs transmis. Par exemple une modulation directe d'intensité associée à un codage Manchester ou 8b/10b est adaptée. On pourra judicieusement associer un code de détection et de correction d'erreur afin d'augmenter la fiabilité de la communication. Le facteur limitant pour la bande passante est le temps de rémanence de l'effet électroluminescent, qui peut être faible en choisissant de façon judicieuse les pigments utilisés.

L'excitation lumineuse peut être avantageusement réalisée à l'aide d'une diode electroluminescence (DEL) qui présente l'avantage de proposer un bon rendement de la conversion énergie électrique vers énergie lumineuse. Une faible dispersion des longueurs d'onde émises autour de la fréquence centrale permet de garantir une bonne adéquation avec le spectre d'absorption de la fibre, ceci visant à garantir qu'un maximum de la puissance émise par la DEL est susceptible d'engendrer la photoluminescence. Ce composant peut facilement intégrer un dispositif optique, de type lentille convergente, assurant la directivité optimum considérant la distance entre la fibre et la DEL et la section de la fibre. L'homme de l'art saura facilement construire un circuit de commande de LED à faible coût capable d'atteindre des fréquences de commutation de 50 MHz ou plus.

Si une seule cellule photosensible est utilisée, elle est positionnée à une extrémité de la fibre optique. On peut avantageusement utiliser deux cellules photosensibles aux deux extrémités de la fibre optique et comparer les signaux lumineux réceptionnés. En effet, l'émission photonique dans la fibre photoluminescente n'est pas directionnelle et est susceptible de se propager dans les deux directions à l'intérieur de la fibre. La redondance de la réception peut ainsi augmenter la fiabilité du procédé.

Suivant un autre mode de réalisation, on mesure l'amplitude du signal lumineux reçu par la cellule photosensible. Cette amplitude constitue un indicateur de la qualité de la communication. On peut également mettre à profit cette mesure d'amplitude pour déterminer une donnée de position de l'équipage mobile, puisque l'atténuation dans la fibre suit une loi exponentielle fonction de la distance parcourue par la lumière et de caractéristiques intrinsèques de la fibre photoluminescente employée.

Dans l'hypothèse où d'une part le signal d'excitation contient une information de position et où d'autre part l'on déduit de l'amplitude du signal une donnée de position, on dispose de deux informations de position au moins partiellement redondantes. Cette redondance peut être mise à profit pour détecter certaines défaillances, par exemple une défaillance du capteur de position fixé à l'équipage mobile. On peut également déterminer la position de l'équipage mobile en combinant la donnée de position déduite de l'amplitude du signal et l'information de position contenue dans le signal d'excitation. Considérant que l'information du capteur de position de l'équipage mobile n'est unique que sur une partie seulement du trajet complet, on peut notamment utiliser la donnée de position déduite de l'amplitude du signal pour déterminer dans quel tronçon de la trajectoire se trouve l'équipage mobile, et l'information de position contenue dans le signal d'excitation pour déterminer précisément la position de l'équipage mobile dans ce tronçon de trajectoire. On peut ainsi équiper avec un même équipement de réception des installations modulaires comportant un nombre quelconque de tronçons de trajectoire.

Le dispositif selon l'invention est défini à la revendication 6. Il a trait à un dispositif de transmission d'informations depuis un équipage mobile guidé le long d'une trajectoire fixe prédéterminée, le dispositif comportant une fibre optique photoluminescente destinée à être positionnée le long de la trajectoire, une source lumineuse d'excitation destinée à être solidaire de l'équipage mobile pour illuminer transversalement la fibre optique photoluminescente, et au moins une cellule photosensible destinée à être située à une extrémité de la fibre optique photoluminescente.

Le dispositif, particulièrement adapté pour la mise en oeuvre du procédé précédemment décrit, comporte de préférence un circuit pour commander la source lumineuse d'excitation et produire un signal lumineux d'excitation dont l'amplitude est modulée.

La cellule photosensible est de préférence une cellule photoélectrique, et le dispositif comporte de préférence également un circuit de réception capable d'amplifier et de filtrer le signal lumineux réceptionné par la cellule photosensible et un circuit de décision et de décodage capable de reconstruire les données utiles.

La fibre électroluminescente est de préférence chargée de particules fluorescentes. En effet, le temps de réponse extrêmement rapide du phénomène de fluorescence est avantageux, notamment par rapport à la phosphorescence.

L'invention vise également à proposer un système de guidage linéaire à un ou plusieurs axes, pourvu de moyens de communication d'informations depuis un ou plusieurs équipages mobiles se déplaçant chacune le long d'une trajectoire prédéterminée vers un récepteur fixe, qui permette une communication robuste dans un milieu perturbé en ondes électromagnétiques, soit adapté à des trajectoires curvilignes ou à des trajectoires rectilinéaires imprécises, et présente une bande passante élevée.

A cet effet, l'installation comporte au moins une première voie de guidage et au moins un premier équipage mobile guidé le long de la première voie de guidage. L'installation comporte en outre au moins une première fibre optique électroluminescente fixée à la première voie de guidage, une première source lumineuse fixée à l'équipage mobile et disposée de manière à exciter transversalement la première fibre optique photoluminescente, et au moins une première cellule photosensible pour réceptionner au moins un premier signal lumineux secondaire émis par la première fibre optique photoluminescente en réponse au premier signal lumineux d'excitation, le signal lumineux secondaire étant guidé dans la première fibre optique photoluminescente. L'installation ainsi définie est adaptée à des voies de guidage rectilignes.

Si la première cellule photosensible est la seule cellule photosensible est utilisée, elle est avantageusement positionnée à une extrémité de la fibre optique. On peut avantageusement utiliser une première cellule photosensible additionnelle, disposée à l'autre extrémité de la fibre optique, en vue de comparer les signaux lumineux réceptionnés par les deux cellules photosensibles. En effet, l'émission photonique dans la fibre photoluminescente n'est pas directionnelle et est susceptible de se propager dans les deux directions à l'intérieur de la fibre. La redondance de la réception peut ainsi augmenter la fiabilité du procédé.

La première cellule photosensible est de préférence une cellule photoélectrique, et l'installation comporte de préférence également un circuit de réception capable d'amplifier et de filtrer le signal lumineux réceptionné par la cellule photosensible et un circuit de décision et de décodage capable de reconstruire les données utiles.

La fibre électroluminescente est de préférence chargée de particules fluorescentes. En effet, le temps de réponse extrêmement rapide du phénomène de fluorescence est avantageux, notamment par rapport à la phosphorescence.

De préférence, on fait en sorte que la source lumineuse d'excitation soit positionnée latéralement à distance de la fibre optique photoluminescente. La distance entre la source lumineuse d'excitation et la fibre optique n'a pas à être déterminée précisément, sous réserve que le faisceau lumineux d'excitation soit judicieusement focalisé, celle-ci peut le cas échéant varier sans que la transmission d'informations en soit perturbée, ce qui est un des avantages de la solution proposée.

On a intérêt à ce qu'une partie substantielle du signal lumineux d'excitation en provenance de la source lumineuse frappe la fibre perpendiculairement à une de ces faces latérales, ce qui favorise une bonne absorption du rayonnement d'excitation, celle-ci étant une fonction monotone de la longueur du faisceau lumineux traversant la fibre. La fibre optique électroluminescente peut avoir une section circulaire ou polygonale, notamment rectangulaire. Une section avec une face plane peut être avantageuse pour optimiser la pénétration de la lumière d'excitation incidente dans la fibre optique électroluminescente, mais ceci seulement si on a des garanties suffisantes sur le positionnement de la source lumineuse d'excitation en face de cette face plane. Dans d'autres circonstances, et notamment lorsque le positionnement de la source lumineuse d'excitation est difficile à maîtriser, on pourra préférer une fibre optique électroluminescente de section circulaire.

Suivant un mode de réalisation particulièrement avantageux, la fibre optique photoluminescente est disposée dans une gorge présentant une ou plusieurs parois réfléchissantes, qui peuvent être concaves ou à section polygonale. La forme de la gorge contenant la fibre améliore l'efficacité de la conversion entre le signal incident et le signal réémis. En effet, les parois latérales et arrière de la gorge réfléchissent la lumière n'ayant pas rencontré la fibre ou non encore absorbée par la fibre. Cette lumière réfléchie peut traverser à nouveau la fibre et exciter le phénomène de photoluminescence. L'amplitude récupérée en bout de fibre est alors plus importante. En pratique, la gorge pourra être formée par exemple dans un rail métallique constituant le cas échéant la voie de guidage, et dont les parois sont suffisamment réfléchissantes pour l'effet recherché.

Pour protéger la première fibre optique photoluminescente des agressions physiques et chimiques, on peut avantageusement la recouvrir d'une couche de résine. Dans le cas d'une fibre optique photoluminescente logée dans une gorge, la couche de résine ferme la gorge. La résine peut le cas échéant entourer totalement la fibre optique photoluminescente et remplir la gorge. La résine sera choisie pour sa faible absorbance à la longueur d'onde utile (par exemple à 400 nm environ), pour sa bonne adhérence avec la fibre et avec le matériau constituant les parois de la gorge, pour sa bonne résistance thermique et chimique (à la graisse, à l'huile de coupe, etc), pour sa dureté de surface et sa lipophilie. On pourra choisir notamment une résine référencée Dymax® 4-20418 / 4-20632. La dureté et la lipophilie pourront le cas échéant être obtenus par un additif à la résine ou par un traitement de surface, par exemple un dépôt de parylène. La résine pourra le cas échéant être réticulable par exposition à un rayonnement ultraviolet, ce qui permet d'envisager un procédé de fabrication dans lequel la fibre est insérée dans la gorge, puis le volume de la gorge non occupé par la fibre est rempli de résine non réticulée. La surface supérieure de résine est ensuite lissée avec un racleur avant exposition à un rayonnement ultraviolet pour obtenir la réticulation.

On peut avantageusement prévoir que le premier équipage mobile soit équipé d'au moins un système de nettoyage de la fibre optique. Il peut être constitué par exemple d'un joint qui vient frotter sur la surface où la lumière pénètre pour atteindre la fibre ou au contraire d'un racloir qui en se déplaçant à très faible distance de la dite surface diminue de manière drastique l'épaisseur de lubrifiant se situant éventuellement en cet endroit.

De préférence, le premier équipage mobile est un chariot roulant en va-et-vient sur la première voie de guidage.

L'installation comporte un premier circuit électronique pour commander la première source lumineuse d'excitation et produire le premier signal lumineux d'excitation, de préférence sous forme d'un signal lumineux numérique. L'installation est particulièrement adaptée à la transmission de signaux numériques. On prendra ainsi soin de choisir une technique de modulation, de préférence numérique, et un codage garantissant un équilibre des motifs transmis. Par exemple une modulation directe d'intensité associée à un codage Manchester ou 8b/10b est adaptée. On pourra judicieusement associer un code de détection et de correction d'erreur afin d'augmenter la fiabilité de la communication. Le facteur limitant pour la bande passante est le temps de rémanence de l'effet électroluminescent, qui peut être faible en choisissant de façon judicieuse les pigments utilisés.

La source lumineuse d'excitation est de préférence une diode électroluminescente, de préférence montée en surface d'une plaque de circuit imprimé du premier circuit électronique ou traversant une plaque de circuit imprimé du premier circuit électronique.

Suivant l'invention le premier circuit électronique comporte en outre au moins un premier capteur de position solidaire de l'équipage mobile, lisant au moins une première information sur un premier codeur solidaire de la première voie de guidage. Le capteur de position peut notamment être un capteur magnétique, et de préférence un capteur incluant un élément magnétorésistant à effet tunnel, ce type de capteur ayant une consommation électrique très faible. Le circuit électronique comporte un module de positionnement pour lire un signal de position généré par le capteur de position et pour générer le premier signal d'excitation de manière à ce que le premier signal d'excitation contienne une information de position fonction du signal de position.

L'alimentation électrique du circuit électronique peut se faire par tout moyen approprié, notamment par pile ou batterie rechargeable embarquée sur l'équipage mobile, ou par prélèvement d'énergie sur le premier équipage mobile en mouvement (vibration d'un quartz piézoélectrique ou d'une cellule à induction excitée par le mouvement de l'équipage mobile, générateur linéaire utilisant un enroulement se déplaçant face à une piste placée le long de la voie de guidage et constituée de pôles magnétiques alternés...).

Suivant un mode de réalisation préféré, la première voie de guidage est équipé d'au moins deux pistes d'alimentation électrique disposées le long de la première voie de guidage et le premier équipage mobile comporte au moins deux contacts électriques mobiles d'alimentation, reliés chacun électriquement au circuit électronique et assurant chacun un contact électrique avec l'une des piste pistes d'alimentation électrique. On peut ainsi avoir une alimentation électrique permanente, ou du moins à volonté, même à l'arrêt à partir d'une source d'énergie non embarquée.

Suivant un mode de réalisation particulièrement avantageux, le premier codeur est constitué par un codeur magnétique recouvert par une bande métallique de protection constituant l'une des pistes d'alimentation électrique.

Une au moins des pistes d'alimentation électrique est isolée de la première voie de guidage. L'autre piste d'alimentation électrique peut également être isolée de la première voie de guidage, ou au contraire être constituée par une surface d'un rail formant tout ou partie de la voie de guidage, et en contact de laquelle vient le contact électrique correspondant de l'équipage mobile.

Suivant un autre mode de réalisation particulièrement avantageux, la première voie de guidage est équipé d'au moins un enroulement primaire d'alimentation électrique disposée de manière à induire un courant électrique dans au moins un enroulement secondaire disposé sur le premier équipage mobile et relié au circuit électronique. Le ou les enroulements primaires sont disposés sur la voie de guidage de manière à générer des variations de flux magnétique dans l'enroulement secondaire quelle que soit la position de l'équipage mobile.

L'installation peut être à un degré de liberté seulement, avec par exemple une voie de guidage fixe rectiligne. Alternativement, il peut s'agir d'une installation à plusieurs degrés de liberté. Ainsi, l'installation peut comporter au moins une deuxième voie de guidage solidaire du premier équipage mobile, et au moins un deuxième équipage mobile guidé le long de la deuxième voie de guidage. On prévoit dans ce cas de préférence au moins une deuxième fibre optique électroluminescente fixée à la deuxième voie de guidage, une deuxième source lumineuse fixée au deuxième équipage mobile et disposée de manière à exciter transversalement la deuxième fibre optique photoluminescente, et au moins une deuxième cellule photosensible solidaire du premier équipage mobile, pour réceptionner au moins un deuxième signal lumineux secondaire émis par la deuxième fibre optique photoluminescente en réponse au deuxième signal lumineux d'excitation, et guidé dans la deuxième fibre optique photoluminescente. Naturellement, le nombre de degrés de liberté peut être supérieur à deux. De préférence, on reproduit pour chaque étage l'architecture précédente. Pour un degré de liberté numéroté N, on prévoit de préférence au moins une N-ième fibre optique électroluminescente fixée à une N-ième voie de guidage solidaire d'un (N-1)-ième équipage mobile, une N-ième source lumineuse fixée au N-ième équipage mobile et disposée de manière à exciter transversalement la N-ième fibre optique photoluminescente, et au moins une N-ième cellule photosensible solidaire du (N-1)-ième équipage mobile pour réceptionner au moins un N-ième signal lumineux secondaire émis par la N-ième fibre optique photoluminescente en réponse au Nième signal lumineux d'excitation, et guidé dans la N-ième fibre optique photoluminescente.

Le (N-1)-ième équipage mobile est pourvu de préférence d'un (N-1)-ième circuit électronique qui comporte et un (N-1)-ième module de commande pour générer un (N-1)-ième signal d'excitation de manière à ce que le (N-1)-ième signal d'excitation contienne une information fonction du N-ième signal lumineux secondaire reçu par la N-ième cellule photosensible.

Le N-ième signal lumineux secondaire peut notamment contenir une information relative à la position du N-ième équipage mobile, et le cas échéant d'équipages mobiles d'ordre supérieur à N.

De préférence, le (N-1)-ième circuit électronique associé au (N-1)-ième équipage mobile comporte également un module de positionnement pour lire un signal de position généré par un capteur de position associé au (N-1)-ième équipage mobile, et le (N-1)-ième circuit de commande génère le (N-1)-ième signal d'excitation de manière à ce que le (N-1)-ième signal d'excitation contienne à la fois une information fonction du N-ième signal lumineux secondaire (par exemple l'information de position du N-ième équipage mobile et/ou aux positions d'équipages mobiles d'ordre supérieur) et l'information de position du (N-1)-ième équipage mobile.

Suivant un autre aspect de l'invention, celle-ci a trait à l'alimentation électrique d'un équipage mobile circulant sur une voie de guidage. Elle concerne en particulier une installation comportant d'une part une voie de guidage équipée d'au moins deux pistes d'alimentation électrique disposées le long de la voie de guidage et d'un codeur magnétique également disposé le long de la voie de guidage, et d'autre part un équipage mobile guidé sur la voie de guidage et équipé d'un circuit électronique incluant un capteur magnétique, mettant en oeuvre de préférence un élément magnétorésistif à effet tunnel, pour lire une information magnétique sur le codeur magnétique, le circuit électronique comportant un module d'alimentation électrique relié aux pistes d'alimentation électrique par au moins deux contacts électriques mobiles d'alimentation. De manière remarquable, le codeur magnétique est recouvert par une bande métallique de protection constituant au moins l'une des pistes d'alimentation électrique.

Suivant un autre aspect de l'invention, ayant trait à la transmission d'information, il est souhaitable de pouvoir envoyer des ordres ou des informations à l'équipage mobile, notamment des ajustements de butée ou des données de calibrations réalisées en usine ou sur le site d'utilisation. La technique décrite par fibre optique étant monodirectionnelle, de l'équipage mobile vers le récepteur fixe, la solution technique retenue pour l'alimentation peut réaliser cette fonction. Par exemple en créant des motifs sur la tension ou le courant de la source d'énergie s'agissant de l'utilisation de contacts électriques ou en modulant l'intensité du flux magnétique s'agissant de l'utilisation de méthode inductive de transfert de puissance.

Pour limiter la consommation d'énergie par l'équipage mobile, il est avantageux dans le cas de transmission d'information de position, d'adapter la cadence d'envoi des informations selon les mouvements de l'équipage mobile. Ceci peut être réalisé en vérifiant la variation de la position actuelle par rapport à la dernière position envoyée, et en ne réalisant de transmission d'information de position que lorsque la dernière position envoyée diffère de la position actuellement connue d'une valeur prédéterminée paramétrable en relation avec la résolution et l'exactitude du système de mesure.

### BRÈVE DESCRIPTION DES FIGURES

D'autres caractéristiques et avantages de l'invention ressortiront à la lecture de la description qui suit, en référence aux figures annexées, qui illustrent:
- la figure 1, une vue schématique d'une installation selon un mode de réalisation de l'invention;
- la figure 2, une vue schématique en coupe transversale d'un détail d'un rail de guidage de l'installation de la figure 1, pourvue d'une gorge de logement d'une fibre optique électroluminescente, suivant un premier mode de réalisation.
- la figure 3, une vue schématique en coupe transversale d'un détail d'un rail de guidage de l'installation de la figure 1, pourvue d'une gorge de logement d'une fibre optique électroluminescente, suivant un deuxième mode de réalisation.
- la figure 4, une vue schématique en coupe transversale d'un détail d'un rail de guidage de l'installation de la figure 1, pourvue d'une gorge de logement d'une fibre optique électroluminescente, suivant un troisième mode de réalisation;
- la figure 5, une vue schématique en coupe transversale d'une diode électroluminescente disposée sur un équipage mobile en regard d'une fibre optique logée dans une gorge d'un rail de guidage, suivant un quatrième mode de réalisation de l'invention;
- la figure 6, une vue schématique en coupe transversale d'une diode électroluminescente disposée sur un équipage mobile en regard d'une fibre optique logée dans une gorge d'un rail de guidage, suivant un cinquième mode de réalisation de l'invention;
- la figure 7, une vue schématique en coupe transversale d'un détail d'un rail de guidage de l'installation de la figure 1, pourvue d'une gorge de logement d'une fibre optique électroluminescente recouverte d'une couche de protection, suivant un sixième mode de réalisation de l'invention;
- la figure 8, une vue schématique en coupe transversale d'un détail d'un rail de guidage de l'installation de la figure 1, pourvue d'une gorge de logement d'une fibre optique électroluminescente recouverte d'une couche de protection, suivant un septième mode de réalisation de l'invention;
- la figure 9, une vue schématique en coupe transversale d'un détail d'un rail de guidage de l'installation de la figure 1, pourvue d'une gorge de logement d'une fibre optique électroluminescente recouverte d'une couche de protection, suivant un huitième mode de réalisation de l'invention;
- la figure 10 une vue schématique isométrique d'une installation selon un neuvième mode de réalisation de l'invention;
- la figure 11, une vue schématique en coupe transversale d'un détail d'un rail de l'installation de la figure 10;
- la figure 12, une vue schématique d'un circuit électronique utilisé dans les différents modes de réalisation de l'invention;
- la figure 13, une vue schématique d'une première variante d'un mode d'alimentation électrique d'un équipage mobile d'une installation selon un mode alternatif de réalisation de l'invention;
- la figure 14, une vue schématique d'une deuxième variante d'un mode d'alimentation électrique d'un équipage mobile d'une installation selon un mode alternatif de réalisation de l'invention;
- la figure 15, une vue schématique d'une troisième variante d'un mode d'alimentation électrique d'un équipage mobile d'une installation selon un mode alternatif de réalisation de l'invention;
- la figure 16, une vue schématique d'une installation à deux axes selon un autre mode de réalisation de l'invention;
- la figure 17, une vue schématique d'un circuit électronique embarqué sur un équipage mobile de l'installation de la figure 16.

Pour plus de clarté, les éléments identiques ou similaires sont repérés par des signes de référence identiques sur l'ensemble des figures.

### DESCRIPTION DÉTAILLÉE DE MODES DE RÉALISATION

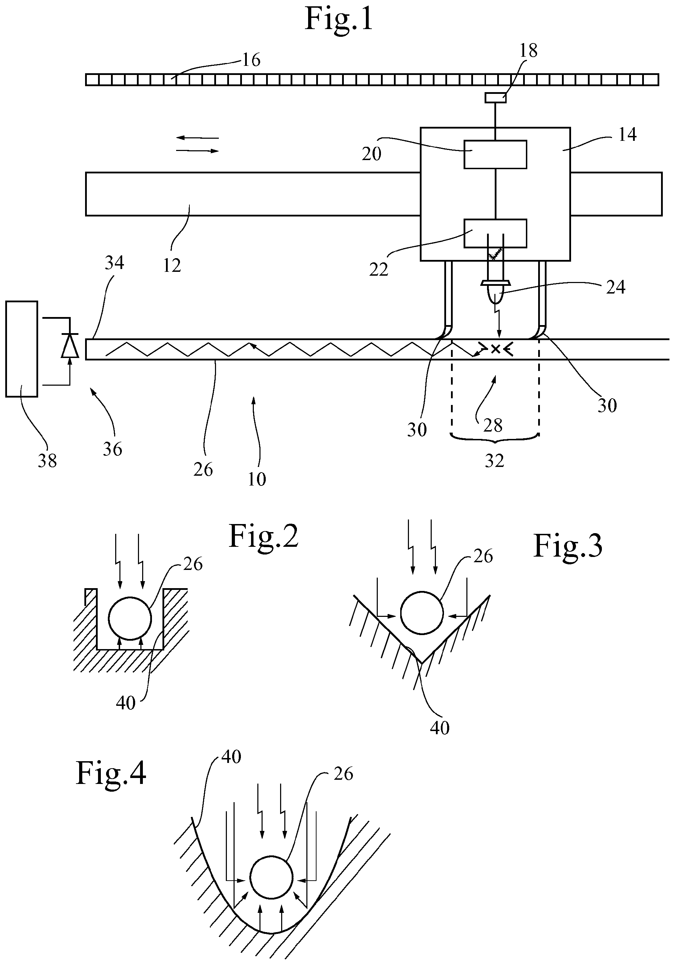

Sur la figure **1** est illustrée une installation **10** comportant une voie de guidage fixe **12,** par exemple un rail de guidage, rectiligne ou curviligne, et un équipage mobile **14** guidé sur la voie de guidage, par exemple un chariot roulant sur cette voie, qui peut être entraîné par exemple par un mécanisme à vis sans fin (non représenté). Le long de la voie **12** est disposé un codeur de position **16** lu par un capteur **18** embarqué sur l'équipage mobile **14.** Le codeur de position **16** peut être un codeur magnétique comportant une ou plusieurs bandes présentant une succession de segments aimantés dont les directions de polarisation sont alternées. Il peut également s'agir d'une simple crémaillère en matériau ferromagnétique, dont la succession de dents et de creux est détectée à distance par le capteur **18.** Le codeur peut également être un codeur optique présentant des graduations lues à distance par le capteur **18.**

Quel que soit le principe retenu pour la détection de la position du chariot par le capteur **18,** le signal produit par ce dernier fait l'objet d'un traitement dans un circuit de conditionnement du signal **20** relié à un circuit de commande **22** d'une source lumineuse d'excitation **24,** par exemple une diode électroluminescente, disposée en regard et à distance d'une fibre optique photoluminescente **26** disposée le long de la voie **12.** La fibre optique est dopée de pigments fluorescents **28** dont la densité est de préférence constante le long de la fibre **26.** L'équipage mobile **14** est pourvu de frotteurs **30** en contact avec la fibre optique et situés, par rapport à la direction de la trajectoire, de part et d'autre de la source lumineuse d'excitation **24,** de manière à ce que la portion **32** de la fibre optique **26** en regard de la source lumineuse **24** soit propre.

À une extrémité **34** de la fibre optique photoluminescente **26** est positionnée une cellule photoélectrique **36** de réception reliée à un circuit électrique de réception **38.**

L'installation **10** fonctionne de la manière suivante. Lors de mouvement de l'équipage mobile **14,** l'information de position lue par le capteur **18** et conditionnée par le circuit de conditionnement **20** donne lieu à l'émission, par la source lumineuse **24** contrôlée par le circuit de commande **22,** d'un signal lumineux numérique qui, quelle que soit la position de l'équipage mobile **14** le long de la voie **12,** illumine une portion **32** de la fibre optique **26** située à ce moment en regard de la source lumineuse **24.**

Le signal lumineux radial incident en provenance de la source lumineuse **24** pénètre dans la fibre optique **26** où il excite les pigments fluorescents **28** à l'intérieur de la fibre **26.** Plus précisément, une partie des photons pénétrant dans la fibre **26** sont absorbés par les pigments fluorescents **28,** qui passent par un état électroniquement excité puis retournent rapidement à leur état fondamental en émettant un photon. Les photons émis transitent ensuite dans la fibre optique en étant réfléchis par les parois de la fibre, et sont ainsi guidés jusqu'à la cellule photoélectrique **36** qui les détecte, permettant un traitement ultérieur par le circuit électrique de détection **38.**

Le rendement de transmission entre l'émission par la source lumineuse d'excitation **24** du signal lumineux d'excitation et la lumière reçue par la cellule de réception photoélectrique **36** est très faible, et fonction de la pénétration du signal lumineux d'excitation dans la fibre **26,** de l'efficacité de l'effet fluorescent, de la fraction de la lumière réémise piégée effectivement dans la fibre mais également de l'atténuation du signal lumineux secondaire émis par les pigments, dans sa trajectoire le long de la fibre **26.** Les essais montrent toutefois que la réception reste possible sur des distances pouvant dépasser plusieurs mètres. La vitesse de transmission est rapide. La bande passante peut être limitée par le temps de réponse du phénomène fluorescent. À titre indicatif, on peut atteindre, en choisissant des pigments à faible rémanence, des bandes passantes de **20**MHz, voire **60**MHz, ce qui est parfaitement adapté à la transmission d'informations de position. Le décalage de longueur d'onde observé entre le signal d'excitation et le signal secondaire émis par la fibre photoluminescente propre au phénomène de fluorescence permet à la lumière émise par photoluminescence de ne pas être réabsorbée par la fibre.

Pour augmenter l'efficacité de la pénétration du signal lumineux d'excitation dans la fibre photoluminescente, on peut avantageusement placer la fibre photoluminescente **26** dans une gorge longitudinale **40** dont les parois sont réfléchissantes, comme illustré sur les coupes transversales des figures **2** à **4****.** Le profil de gorge **40** en U illustré sur la figure **2** permet à la lumière d'excitation qui a traversé la fibre photoluminescente **26** de se réfléchir au fond de la gorge pour être redirigée vers la fibre **26.** Le profil en V de la figure **3** permet à des rayons lumineux du signal d'excitation qui n'ont pas rencontré directement la fibre photoluminescente **26** d'être redirigés par réflexion vers cette dernière. Enfin, le profil parabolique de la figure **4** combine les deux effets précédents et permet de faire converger vers le foyer où se trouve la fibre **26** des rayons lumineux du signal incident qui n'ont pas rencontré directement la fibre **26,** et d'autres qui ont traversé la fibre.

On peut également, à l'aide du même dispositif, transmettre d'autres informations obtenues sur l'équipage mobile, relatives par exemple à l'état de charge d'une source d'énergie embarquée, à une température ou une autre variable d'état détectée par un capteur embarqué par l'équipage mobile, notamment une information de position provenant des dispositifs placé sur d'autres voies de guidage.

On peut le cas échéant prévoir une deuxième cellule photosensible disposée à l'autre extrémité de la fibre optique, reliée à un deuxième circuit de réception, ce qui peut permettre un fonctionnement même en cas de coupure de la fibre. On peut également doubler la longueur de la trajectoire définie par la voie en prévoyant deux dispositifs de mesure distincts, chacun avec une fibre optique couvrant au moins une des deux moitiés de la voie. Une zone de recouvrement peut être prévue entre les deux fibres optiques.

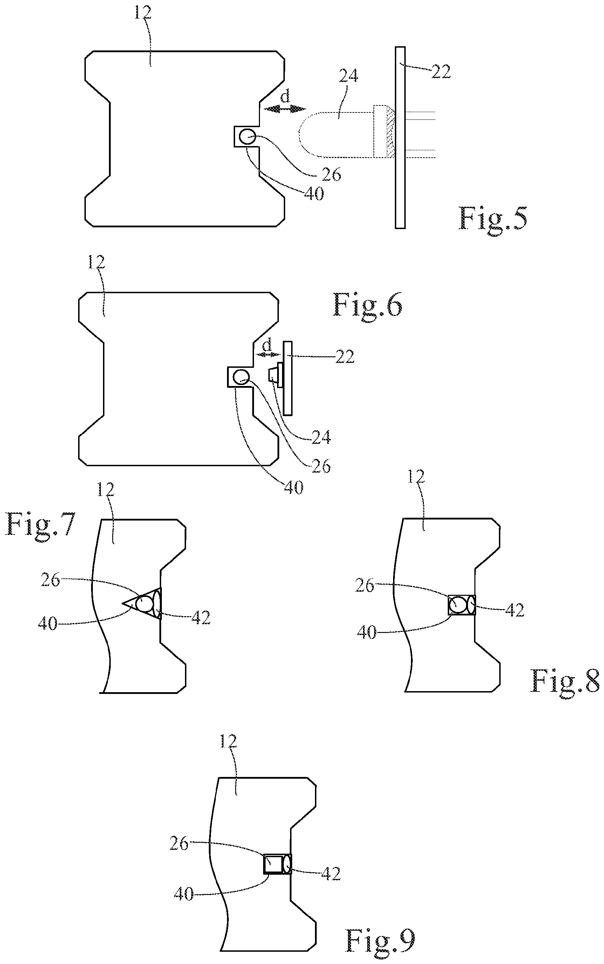

On a illustré sur la figure **5** un mode particulier de réalisation d'un rail de guidage **12** de l'installation **10** de la figure **1****,** dans lequel a été formé une gorge **40** de logement d'une fibre optique photoluminescente **26,** placée en regard d'une diode électroluminescente **24** montée au travers d'une plaque de circuit imprimé du circuit de commande **22** de la diode électroluminescente **24** et solidaire d'un chariot roulant non représenté. Sur la figure **6** est illustrée une variante de réalisation avec une diode électroluminescente **26** d'un type différent, positionné en surface d'une plaque de circuit imprimé **22** constituant le circuit de commande **22.**

Sur la figure **7** est illustré un rail de guidage **12** qui peut être utilisé pour l'installation **10** de la figure **1****,** et qui est pourvu d'une gorge **40** en biseau dans laquelle est logée une fibre optique photoluminescente de section circulaire **26.** De manière remarquable, un revêtement **42** en résine recouvre la fibre optique photuminescente **26** et refermer la gorge **40** en adhérant aux parois opposées de la gorge **40.** Pour ne pas entraver l'émission photonique secondaire, la résine utilisée présente une faible absorbance dans la gamme de longueur d'ondes de la diode électroluminesente **24** provoquant l'émission photonique secondaire par les pigments **28.** Le revêtement **40** participe au maintien de la fibre **26** dans la gorge **40** et à la protection chimique et mécanique de la fibre **26.** Sur la figure **8** est illustré un mode de réalisation ne se distinguant de celui de la figure **7** que par la section de la gorge **40,** qui présente deux parois opposées parallèles et planes, et une paroi de fond qui peut être plane comme illustrée, ou concave. Sur la figure **9** est illustrée une variante de réalisation qui ne diffère du mode de réalisation de la figure **8** que par la section de la fibre photoluminesente, qui est ici de section carrée ou rectangulaire. Dans cette hypothèse, le fond de la gorge **40** est de préférence plan et en contact surfacique avec la fibre **40.** Dans les modes de réalisation des figures **5** à **9****,** les faces de la gorge **40** sont de préférence traitées de manière à réfléchir la lumière.

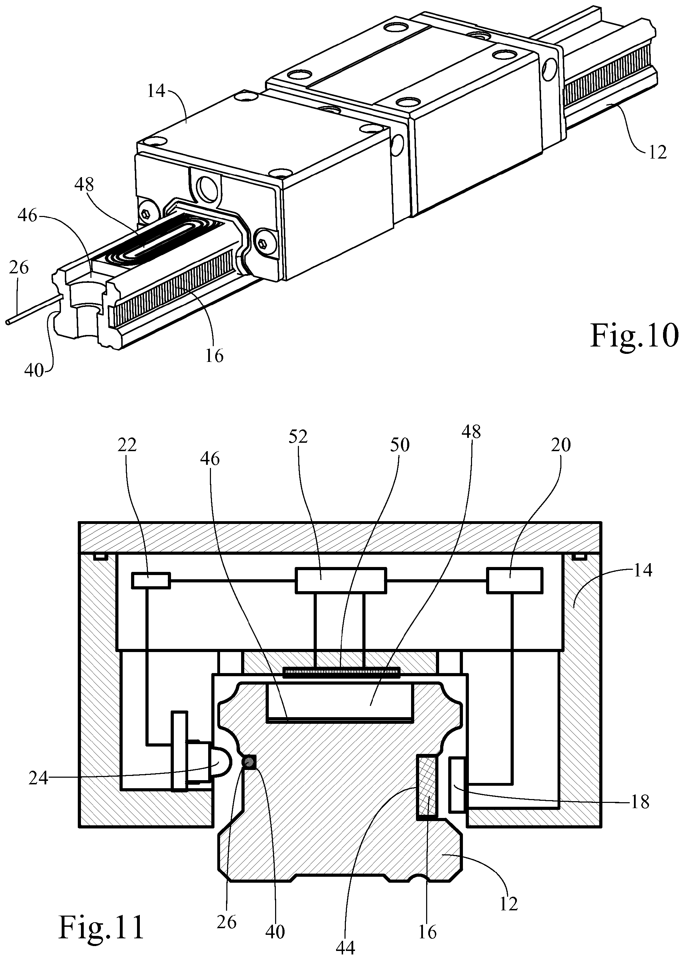

Sur les figures **10** et **11** est illustrée une installation **10** comportant une voie de guidage fixe **12** constituée par un rail de guidage rectiligne, et un équipage mobile **14** constitué par un chariot roulant ou glissant sur la voie de guidage, qui peut être entraîné par tout moyen d'entraînement approprié, par exemple par un mécanisme à vis sans fin (non représenté). Le long de la voie **12** est disposé un codeur de position **16** lu par un capteur **18** embarqué sur l'équipage mobile **14.** Le codeur de position **16** peut être un codeur magnétique logé dans une gorge **44** du rail **12** et comportant une ou plusieurs bandes présentant une succession de segments aimantés dont les directions de polarisation sont alternées. Sur le rail **12** est également formée une gorge **40** de logement d'une fibre photoluminescente **26** suivant l'une des modes de réalisation des figures **2** à **9****.** De manière remarquable, le rail est également pourvu d'une gorge **46** de réception d'un enroulement primaire **48** inductif plat qui fait face à un enroulement secondaire d'induit **50** solidaire du chariot **14.** L'enroulement primaire **48** est relié à une source de tension alternative **49** et l'enroulement secondaire est relié à un bloc d'alimentation **52** des circuits de conditionnement **20** et de commande **22.** Le positionnement relatif de l'enroulement secondaire **50** et de l'enroulement primaire **48** est tel que quel que soit le positionnement du chariot **14** sur le rail **12,** un courant primaire traversant l'enroulement primaire **48** induit un courant secondaire dans l'enroulement secondaire, propre à alimenter le bloc d'alimentation **52** et par son intermédiaire les circuits électroniques **20, 22** portés par le chariot **14.**

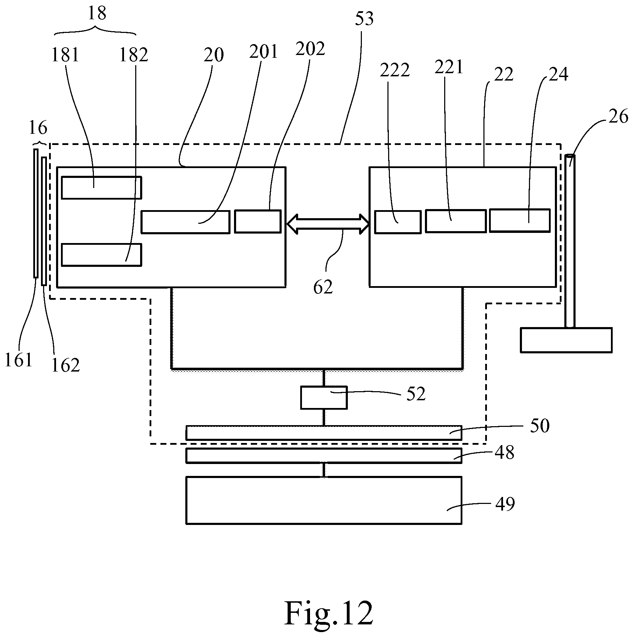

On a illustré plus précisément sur la figure **12** un mode de réalisation de l'électronique embarquée sur l'équipage mobile **14.** Le capteur **18** comporte ici deux têtes de mesure **181, 182** comportant chacune de préférence un élément magnétorésitant à effet tunnel, et chacune dédiée à la lecture d'une piste **161, 162** du codeur **16,** ceci afin d'offrir une mesure de position absolue de haute résolution, après conditionnement des signaux par un module de conditionnement **201** et calcul par un microcontrôleur dédié **202.** La liaison entre le circuit de conditionnement **20** et le circuit de commande **22** de la source lumineuse d'excitation **24,** est réalisée par un bus synchrone **62.** Le circuit de commande **22** est lui-même pourvu d'un microcontrôleur qui communique avec le microcontrôleur **202** du circuit de conditionnement du signal **20** pour déterminer l'information de position à faire transiter par la fibre optique photoluminescente **26.** Le microcontrôleur **221** commande un pilote **221** qui gère les illuminations de la diode électroluminescente **24.** Les deux circuits **20, 22** sont alimentés par le circuit d'alimentation, relié au récepteur d'énergie **50** disposé en regard du circuit primaire **48.** Les deux circuits **20, 22** peuvent être matériellement distants l'un de l'autre et constituer deux modules distincts, ou être réunis sur une même carte électronique. Dans tous les cas, ils forment fonctionnellement un circuit électronique unique **53.**

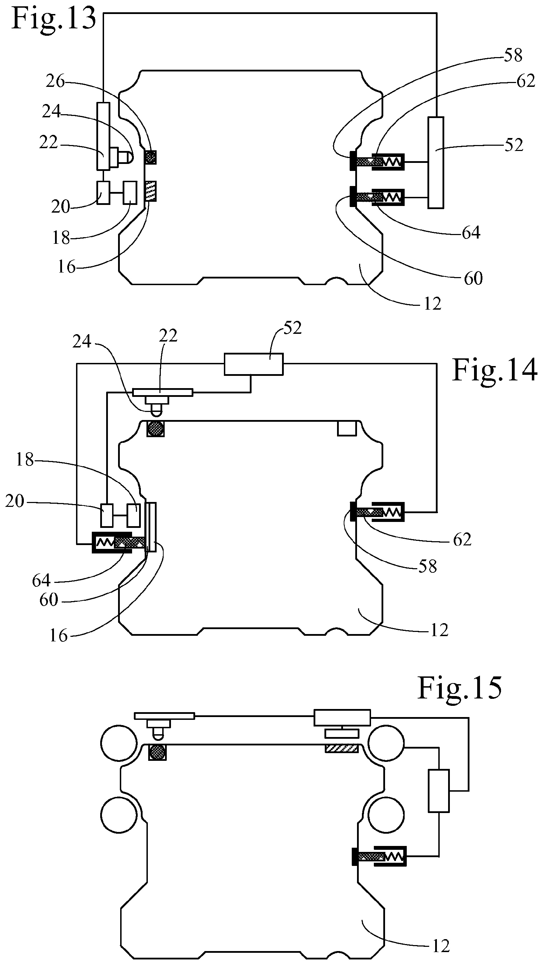

Alternativement, il est possible d'alimenter les circuits électroniques portés par le chariot **14** par des dispositifs à contacts glissant ou roulant sur des pistes de contact suivant la trajectoire guidée du chariot **14.** Sur la figure **13****,** on a illustré un rail de guidage **12** pourvue de deux gorges **54, 56** de logement de deux pistes de contact conductrices **58, 60.** Chaque piste **58, 60** est isolée du rail de guidage **12.** Le chariot **14** est quant à lui équipé de deux patins de contact **62, 64** reliés à un module l'alimentation **52** des circuits de conditionnement **20** et de commande **22.** On peut ainsi, en reliant les pistes conductrices **58, 60** à une source d'énergie électrique, alimenter le module d'alimentation **52** et, par son intermédiaire, les circuits électroniques **20, 22.** Suivant une variante illustrée sur la figure **14****,** l'une des pistes de contact conductrices, en l'occurrence la piste **60,** est constituée par une couche métallique venant recouvrir le codeur **16** constitué par une bande magnétique pourvue d'une succession de pôles magnétiques alternés. La piste **60** a alors une double fonction de contact électrique et de protection mécanique et chimique de la bande magnétique du codeur **16.** Le cas échéant, la bande magnétique **16** peut être rendue solidaire de la piste métallique **60** par adhésion directe ou par l'intermédiaire d'un adhésif. Suivant la variante de la figure **15****,** le rail de guidage métallique **12** est utilisé pour constituer l'une des phases d'alimentation électrique de l'équipage mobile **14.** Plus spécifiquement, l'une des piste de contact est constituée par un chemin de roulement **60,** la continuité électrique entre le chemin de roulement et le module d'alimentation électrique **52** étant assurée par des corps roulants **64** qui assurent simultanément le guidage du chariot **14** sur le rail **12.** Naturellement, d'autres variantes sont possibles.

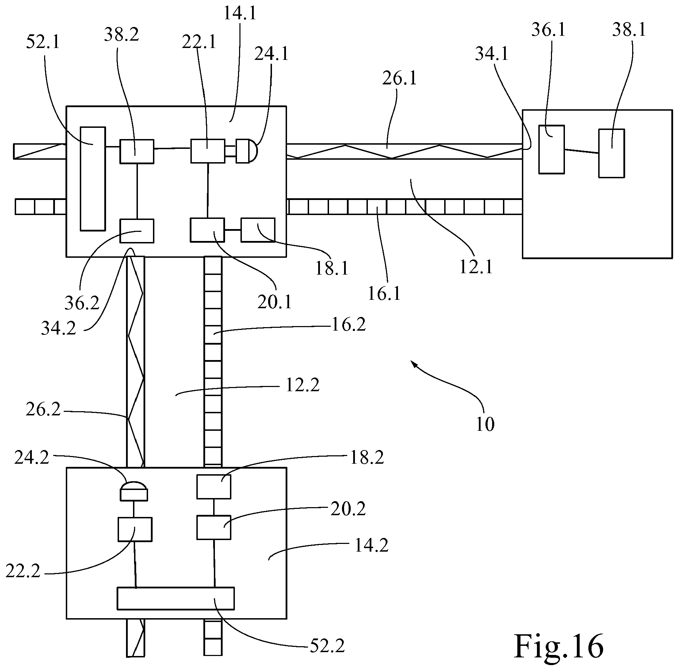

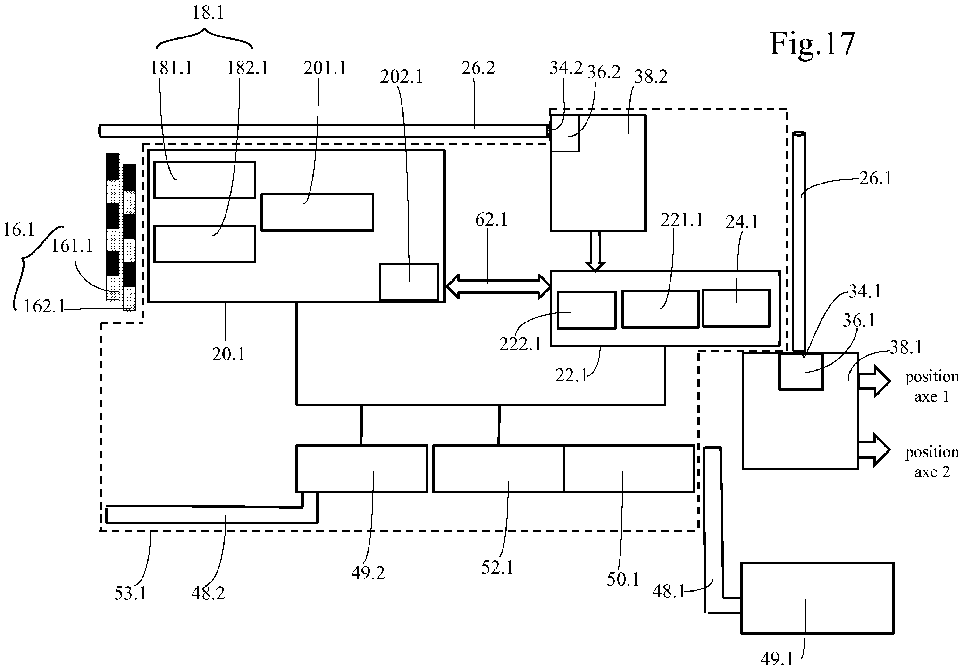

On a illustré sur les figures **16** et **17** une application de l'invention à une installation à deux axes perpendiculaires. Un premier rail de guidage **12.1** assure le guidage rectilinéaire en va-et-vient d'un premier chariot **14.1,** qui porte un deuxième rail de guidage **12.2** perpendiculaire au rail **12.1** et assurant le guidage rectilinéaire en va-et-vient d'un deuxième chariot **14.2.**

De la même manière que pour les systèmes monoaxiaux précédents , on peut mettre en oeuvre une transmission d'information par une fibre optique photoluminescente **26.1** associée au premier rail de guidage **12.1,** fibre dont l'extrémité **34.1** est située en regard d'un récepteur **36.1** fixe par rapport au premier rail de guidage **12.1.** On peut également réaliser une transmission d'information par fibre optique photoluminescente entre le deuxième chariot **14.2** et le premier chariot **14.1.** Il suffit pour cela de prévoir une fibre optique photoluminescente **26.2** cheminant le long du rail **12.2,** de préférence logé dans une gorge de logement prévue dans le rail **12.2,** dont l'extrémité **34.2** est positionnée en regard d'une cellule photoélectrique **36.2** reliée à un circuit de détection **38.2** embarqué par le premier chariot **14.1.**

Si l'on souhaite qu'une information de position du deuxième chariot **14.2** soit transmise au premier chariot **14.1** et au récepteur photoélectrique **36.1** fixe, on peut prévoir un codeur de position **16.2** à une ou plusieurs pistes, associé au deuxième rail **12.2** et permettant une lecture de position par un capteur **18.2** embarqué sur le deuxième chariot **14.2.** Ce capteur **18.2** est relié à un circuit de conditionnement **20.2** qui fournit une information de position à un circuit de commande **22.2** d'une source lumineuse **24.2** embarquée sur le deuxième chariot **14.2.** Cette source lumineuse **24.2,** en pratique une diode électroluminescente, active la fibre optique photoluminescente **26.2** qui émet une signal lumineux secondaire qui chemine le long de la fibre **26.2** jusqu'à atteindre un récepteur **36.2** embarqué sur le premier chariot **14.1.** Le circuit de commande **22.1** embarqué sur le premier chariot **14.1** reçoit des informations de position à la fois du circuit de détection **38.2** relié au récepteur **36.2** et du circuit de conditionnement **20.1** relié au capteur **18.1** embarqué sur le premier chariot pour lire le codeur **16.1** cheminant le long du premier rail **12.1.** Le circuit de commande **22.1** génère alors un signal de commande de la source lumineuse **24.1** embarquée par le premier chariot, qui permet de transmettre successivement en les identifiant de manière unique à la fois une information sur la position du deuxième chariot et une information sur la position du premier chariot. Le source lumineuse **24.1** active la fibre optique photoluminescente **26.1** qui émet une signal lumineux secondaire qui chemine le long de la fibre **26.1** jusqu'à atteindre le récepteur fixe **36.1.**

L'alimentation électrique des circuits électroniques **20.2, 22.2** embarqués sur le deuxième chariot peut être réalisée par l'intermédiaire du premier chariot. On peut notamment prévoir qu'une partie de l'énergie collectée par le module d'alimentation **52.1** du premier chariot suivant l'une des méthodes décrites précédemment, par exemple par induction ou par contacts électriques, soit dérivée pour alimenter le deuxième chariot **14.2** également suivant l'une des méthodes décrite précédemment. Le deuxième chariot **14.2** embarque à cet effet un module d'alimentation électrique **52.2** qui collecte cette énergie et alimente les circuits **20.2, 22.2.**

On a illustré plus précisément sur la figure **17** le circuit électronique **53.1** embarqué par le premier chariot **14.1,** et notamment les têtes de lecture **181.1, 182.1** lisant les deux pistes **161.1, 162.1** du codeur **16.1** associé au premier rail **12.1,** le circuit de conditionnement **201.1** des signaux des têtes de lecture **181.1, 182.1,** et le microcontrôleur **202.1** intégrés au circuit de conditionnement **20.1.** Les signaux en provenance du microcontrôleur **202.1** et du circuit de détection **38.2** relié à la cellule photoélectrique **36.2** également embarquée sur le premier chariot **14.1** sont délivrés au microcontrôleur **222.1** du circuit de commande **22.1** qui pilote la diode électroluminescente **24.1** par l'intermédiaire du pilote **221.1.** On a également précisé sur la figure **17** le cheminement de l'énergie électrique d'alimentation depuis une source d'alimentation fixe **49.1** alimentant un enroulement primaire **48.1** associé au premier rail de guidage **12.1** jusqu'à l'enroulement secondaire **50.1** embarqué sur le premier chariot et relié à un circuit redresseur **52.1** qui alimente à la fois les circuit de conditionnement **20.1** et de commande **22.1** embarqués par le premier chariot **14.1** et un circuit oscillant **49.2** qui alimente un enroulement primaire **48.2** associé au deuxième rail de guidage **12.2,** pour alimenter par induction le circuit d'alimentation **52.2** embarqué sur le deuxième chariot **14.2.** Les têtes de lecture **181.1, 182.1** associées au premier chariot **14.1** ainsi que celles associés au deuxième chariot **14.2,** sont de préférence des éléments magnétorésitants à effet tunnel.

Naturellement, diverses variations sont possibles. La voie de guidage **12** est rectiligne et définit un degré de liberté unique. Elle peut être réalisée matériellement par un rail unique en une ou plusieurs sections, ou par plusieurs rails parallèles. Le guidage de l'équipage mobile **14, 14.1, 14.2** peut être effectué par roulement, par glissement sec ou lubrifié ou par sustentation pneumatique ou magnétique. L'entraînement de l'équipage mobile **14, 14.1, 14.2** peut être obtenu par tout moyen approprié, et notamment par un mécanisme à écrou et vis sans fin, avec ou sans recirculation de billes. L'équipage mobile **14** peut également être sans moyen d'entraînement, donc libre dans son mouvement par rapport à la voie de guidage. La fibre optique **26** n'est pas nécessairement intégrée à la voie de guidage, pour autant qu'elle chemine le long de la voie et, de préférence, reste fixe par rapport à la voie de guidage **12.** De même, le codeur **16** n'est pas nécessairement intégré à la voie de guidage pour autant qu'il reste fixe par rapport à la voie de guidage **12** et chemine le long de la voie. Le nombre d'axes peut être augmenté au-delà de deux. L'alimentation électrique des circuits embarqués sur le ou les équipages mobiles, ou de certains d'entre eux au moins, peut être réalisée par une source électrochimique embarquée, rechargeable ou non.

D'une manière générale, les caractéristiques décrites en relation avec un mode de réalisation peuvent être transposées à d'autres modes de réalisation. Ainsi, l'homme du métier pourra notamment combiner l'un quelconque des modes de réalisation de la source lumineuse **24** illustré sur les figures **5** et **6** avec l'un quelconque des modes d'intégration de la fibre optique **26** au rail de guidage **12** illustrés sur les figures **7** à **9** et avec l'un quelconque des modes d'alimentation électrique illustrés sur les figures **10** à **15****,** pour réaliser des variante de l'installation à un ou plusieurs axes.

Il est à noter par ailleurs que les modes d'alimentation électrique illustrés sur les figures **10** à **15** sont utilisables pour alimenter tout type de circuit électrique ou électronique embarqué sur un chariot mobile le long d'un rail de guidage, indépendamment des modalités choisies pour une transmission d'information entre ce chariot mobile et un récepteur distant, voire indépendamment de l'existence d'une telle transmission.

## Revendications

1. Procédé de détermination et de transmission d'informations de position depuis un équipage mobile (14) guidé le long d'une trajectoire rectilinéaire fixe prédéterminée, selon lequel on acquiert un signal de position de l'équipage mobile avec un capteur de position (18) solidaire de l'équipage mobile (14) lisant une information sur un codeur (16) positionné le long de la trajectoire fixe prédéterminée, **caractérisé en ce que** l'on émet un signal lumineux d'excitation contenant une information de position de l'équipage mobile (14), fonction du signal de position de l'équipage mobile (14), depuis une source lumineuse (24) associée à l'équipage mobile (14) de manière à exciter transversalement une fibre optique photoluminescente (26) disposée le long de la trajectoire, et l'on réceptionne à l'aide d'au moins une cellule photosensible (36) au moins un signal lumineux secondaire émis par la fibre optique photoluminescente (26) en réponse au signal lumineux d'excitation, et guidé dans la fibre optique photoluminescente (26).

2. Procédé selon la revendication précédente, **caractérisé en ce que** le signal d'excitation est un signal numérique.

3. Procédé selon l'une quelconque des revendications précédentes, **caractérisé en ce que** l'on positionne la cellule photosensible (36) à une extrémité de la fibre optique photoluminescente (26).

4. Procédé selon l'une quelconque des revendications précédentes, **caractérisé en ce que** l'on mesure une amplitude du signal reçu à une extrémité de la fibre pour déterminer un indicateur de qualité de la communication ou une donnée de position de l'équipage mobile (14).

5. Procédé selon la revendication 4, **caractérisée en ce que** l'on détermine une position absolue de l'équipage mobile (14) à partir de l'information de position et de la donnée de position de l'équipage mobile (14).

6. Installation de guidage rectilinéaire à un ou plusieurs axes, comportant au moins une première voie de guidage (12, 12.1, 12.2), au moins un premier équipage mobile (14, 14.1, 14.2) guidé le long de la première voie de guidage (12, 12.1, 12.2), et au moins un premier capteur de position (18, 18.1, 18.2) solidaire de l'équipage mobile (14, 14.1, 14.2), lisant au moins une première information sur un premier codeur (16, 16.1, 16.2) solidaire de la première voie de guidage (12, 12.1, 12.2), **caractérisée en ce que** l'installation comporte en outre au moins une première fibre optique électroluminescente (26, 26.1, 26.2) fixée à la première voie de guidage (12, 12.1, 12.2), une première source lumineuse (24, 24.1, 24.2) fixée à l'équipage mobile (14, 14.1, 14.2) et disposée latéralement à distance de la première fibre optique photoluminescente (26, 26.1, 26.2) de manière à exciter transversalement la première fibre optique photoluminescente (26, 26., 26.2), au moins une première cellule photosensible (36, 36.1, 36.2) pour réceptionner au moins un premier signal lumineux secondaire émis par la première fibre optique photoluminescente (26, 26.1, 26.2) en réponse au premier signal lumineux d'excitation, et guidé dans la première fibre optique photoluminescente (26, 26.1, 26.2), et un premier circuit électronique (53, 53.1) pour commander la première source lumineuse d'excitation (24, 24.1, 24.2) et produire le premier signal lumineux d'excitation sous forme d'un signal lumineux numérique, le premier circuit électronique (53, 53.1) comportant un module de positionnement (20, 20.1, 20.2) pour lire un signal de position généré par le capteur de position (18, 18.1, 18.2) et un module de commande (22, 22.1, 22.2) pour générer le premier signal d'excitation de manière à ce que le premier signal d'excitation contienne une information de position fonction du signal de position.

7. Installation (10) selon la revendication 6, **caractérisée en ce que** la première cellule photosensible (36, 36.1, 36.2) est disposée à une extrémité (34, 34.1, 34.2) de la première fibre optique photoluminescente (26, 26.1, 26.2).

8. Installation selon la revendication 7, **caractérisée en ce qu'**elle comporte première cellule photosensible additionnelle disposée à l'autre extrémité de la fibre optique (26, 26.1, 26.2).

9. Installation selon l'une quelconque des revendications 6 à 8, **caractérisée en ce que** la première fibre optique photoluminescente (26, 26.1, 26.2) présente une section transversale circulaire.

10. Installation selon l'une quelconque des revendications 6 à 8, **caractérisée en ce que** la première fibre optique photoluminescente (26, 26.1, 26.2) présente une section transversale polygonale, de préférence rectangulaire ou carrée.

11. Installation selon l'une quelconque des revendications 6 à 10, **caractérisée en ce que** la première fibre optique photoluminescente (26, 26.1, 26.2) est disposée dans une gorge (40) de la première voie de guidage (12, 12.1, 12.2), la gorge (40) présentant de préférence une ou plusieurs parois réfléchissantes.

12. Installation selon l'une quelconque des revendications 6 à 10, **caractérisée en ce que** le premier équipage mobile (14, 14.1, 14.2) est pourvu d'au moins un système (30) de nettoyage de la fibre optique (26, 26.1, 26.2).

13. Installation selon l'une quelconque des revendications 6 à 12, **caractérisée en ce que** le premier équipage mobile (14) est un chariot roulant en va-et-vient sur la première voie de guidage (12).

14. Installation selon l'une quelconque des revendications 6 à 13, **caractérisée en ce que** la source lumineuse d'excitation (24, 24.1, 24.2) est une diode électroluminescente, de préférence montée en surface d'une plaque de circuit imprimé du premier circuit électronique (53, 53.1) ou traversant une plaque de circuit imprimé du premier circuit électronique (53, 53.1).

15. Installation selon l'une quelconque des revendications 6 à 14, **caractérisée en ce que** le capteur de position (18, 18.1, 18.2) est un capteur magnétique, incluant de préférence un élément magnétorésitant à effet tunnel.

16. Installation selon l'une quelconque des revendications 6 à 15, **caractérisée en ce que** le premier équipage mobile (16, 16.1, 16.2) comporte au moins deux contacts électriques mobiles d'alimentation (62, 64), reliés chacun électriquement au circuit électronique (53, 53.1) et assurant chacun un contact électrique avec une piste d'alimentation électrique (58, 60) disposée le long de la première voie de guidage (12, 12.1, 12.2).

17. Installation selon la revendication 16, **caractérisée en ce que** le premier codeur (16, 16.1, 16.2) est constitué par un codeur magnétique recouvert par une bande métallique de protection constituant la piste d'alimentation électrique (60).

18. Installation selon l'une quelconque des revendications 6 à 15, **caractérisée en ce que** la première voie de guidage (12, 12.1, 12.2) est équipée d'au moins un enroulement primaire (48, 48.1, 48.2) d'alimentation électrique disposé de manière à induire un courant électrique dans au moins un enroulement secondaire (50, 50.1, 50.2) disposé sur le premier équipage mobile (14, 14.1, 14.2) et relié au circuit électronique (53, 53.1).

## Patentansprüche

1. Verfahren zum Bestimmen und Übertragen von Positionsinformationen von einer mobilen Besatzung (14), die entlang einer festen geradlinigen vorbestimmten Bahn geführt wird, wonach ein mobiles Positionssignal der Besatzung mit einem Positionssensor erfasst (18) wird, der mit der mobilen Besatzung (14) verbunden ist und eine Information über einen Kodierer (16) liest, der entlang des vorbestimmten festen Weges positioniert ist, **dadurch gekennzeichnet, dass** ein Erregungslichtsignal, welches eine Positionsinformation der mobilen Besatzung (14) enthält, die Funktion des Positionssignals der mobilen Besatzung (14) ist, von einer Lichtquelle (24) ausgesendet wird, die mit der mobilen Besatzung auf derartige Weise verbunden ist (14), dass eine entlang des Weges angeordnete photolumineszierende Lichtfaser (26) quer angeregt wird und mindestens ein von der photolumineszierenden Lichtfaser (26) als Reaktion auf das Anregungslichtsignal emittiertes und in der photolumineszierenden Lichtfaser geführtes (26) Sekundärlichtsignal mittels mindestens einer lichtempfindlichen Zelle (36) empfangen wird.

2. Verfahren nach dem vorhergehenden Anspruch, **dadurch gekennzeichnet, dass** das Anregungssignal ein digitales Signal ist.

3. Verfahren nach einem der vorhergehenden Ansprüche, **dadurch gekennzeichnet, dass** die lichtempfindliche Zelle (36) an einem Ende der photolumineszierenden optischen Faser (26) angeordnet ist.

4. Verfahren nach einem der vorhergehenden Ansprüche, **dadurch gekennzeichnet, dass** man eine Amplitude des an einem Ende der Faser empfangenen Signals zur Bestimmung einer Kommunikationsqualitätsanzeige oder eines Positionsdatum der mobilen Besatzung (14) misst.

5. Verfahren nach Anspruch 4, **dadurch gekennzeichnet, dass** eine absolute Position der mobilen Besatzung (14) aus der Positionsinformation und des Positionsdatum der mobilen Besatzung (14) bestimmt wird.

6. Ein- oder mehrachsige geradlinige Führungsanlage mit mindestens einer ersten Führungsbahn (12, 12.1, 12.2), mindestens einer entlang der ersten Führungsbahn (12, 12.1, 12.2) geführten ersten mobilen Besatzung (14, 14.1, 14.2) und mindestens einem mit der mobilen Besatzung (14, 14.1, 14.2) fest verbundenen ersten Positionssensor (18, 18.1, 18.2), der mindestens eine erste Information über einen ersten Encoder (16, 16.1, 16.2) abliest, der mit der ersten Führungsschiene (12, 12.1, 12.2) fest verbunden ist, **dadurch gekennzeichnet, dass** die Anlage darüber hinaus mindestens folgendes umfasst: eine erste elektrolumineszierende Lichtfaser (26, 26.1, 26.2), die an der ersten Führungsschiene (12, 12.1, 12.2) befestigt ist, eine erste Lichtquelle (24, 24.1, 24.2), die fest mit der mobilen Besatzung (14, 14.1, 14.2) verbunden und seitlich in Abstand von der ersten photolumineszierenden Lichtleitfaser angebracht ist (26, 26.1, 26.2), um die erste photolumineszierende Lichtleitfaser (26, 26, 26, 26.2) quer anzuregen, mindestens eine erste lichtempfindliche Zelle (36, 36.1, 36.2) zum Empfang mindestens eines ersten sekundären Lichtsignals, der von der ersten photolumineszierenden optischen Faser (26, 26.1, 26.2) als Reaktion auf das erste Anregungslichtsignal abgesendet und in der ersten photolumineszierenden optischen Faser (26, 26.1, 26.2) geführt wird, und eine erste elektronische Schaltung (53, 53.1) zur Steuerung der ersten Anregungslichtquelle (24, 24.1, 24.2) und zur Erzeugung des ersten Anregungslichtsignals in der Form eines digitalen Lichtsignals, wobei die erste elektronische Schaltung (53, 53.1) mit einem Positioniermodul (20, 20.1, 20.2) zum Lesen eines vom Positionssensor (18, 18.1, 18.2) erzeugten Positionssignals und einem Steuermodul (22, 22.1, 22.2) zum Erzeugen des ersten Anregungssignals ausgestattet ist, so dass das erste Anregungssignal eine Positionsinformation abhängig vom Positionssignal enthält.

7. Anlage (10) nach Anspruch 6, **dadurch gekennzeichnet, dass** die erste lichtempfindliche Zelle (36, 36.1, 36.2) an einem Ende (34, 34.1, 34.2) der ersten photolumineszierenden optischen Faser (26, 26.1, 26.2) angeordnet ist.

8. Anlage nach Anspruch 7, **dadurch gekennzeichnet, dass** sie eine erste zusätzliche lichtempfindliche Zelle, die am anderen Ende der Glasfaser (26, 26.1, 26.2) angebracht ist, umfasst.

9. Anlage nach einem der Ansprüche 6 bis 8, **dadurch gekennzeichnet, dass** die erste photolumineszierende Lichtleitfaser (26, 26.1, 26.2) einen kreisförmigen Querschnitt hat.

10. Anlage nach einem der Ansprüche 6 bis 8, **dadurch gekennzeichnet, dass** die erste photolumineszierende Lichtleitfaser (26, 26.1, 26.2) einen polygonalen Querschnitt, vorzugsweise rechteckig oder quadratisch, hat.

11. Anlage nach einem der Ansprüche 6 bis 10, **dadurch gekennzeichnet, dass** die erste photolumineszierende optische Faser (26, 26.1, 26.2) in einer Nut (40) der ersten Führungsschiene (12, 12.1, 12.2) angeordnet ist, (40) vorzugsweise mit einer oder mehreren reflektierenden Wänden.

12. Anlage nach einem der Ansprüche 6 bis 10, **dadurch gekennzeichnet, dass** die erste mobile Besatzung (14, 14.1, 14.2) mit mindestens einem Lichtwellenleiter-Reinigungssystem (30) (26, 26.1, 26.2) ausgestattet ist.

13. Anlage nach einem der Ansprüche 6 bis 12, **dadurch gekennzeichnet, dass** die erste mobile Besatzung (14) ein auf der ersten Führungsschiene (12) hin- und herfahrender Wagen ist.

14. Anlage nach einem der Ansprüche 6 bis 13, **dadurch gekennzeichnet, dass** die Anregungslichtquelle (24, 24.1, 24.2) eine Elektrolumineszenzdiode ist, die vorzugsweise auf der Oberfläche einer Leiterplatte der ersten elektronischen Schaltung (53, 53.1) montiert ist oder durch eine Leiterplatte der ersten elektronischen Schaltung (53, 53.1) läuft.

15. Anlage nach einem der Ansprüche 6 bis 14, **dadurch gekennzeichnet, dass** der Positionssensor (18, 18.1, 18.2) ein magnetischer Sensor ist, vorzugsweise mit einem magnetoresistiven Tunnelelement.

16. Anlage nach einem der Ansprüche 6 bis 15, **dadurch gekennzeichnet, dass** die erste mobile Besatzung (16, 16.1, 16.2) mindestens zwei bewegliche Kontakte für die elektrische Versorgung (62, 64) umfasst, die jeweils elektrisch mit dem elektronischen Schaltkreis (53, 53.1) verbunden sind und jeweils einen elektrischen Kontakt mit einer elektrischen Versorgungsleitung (53, 53.1) haben, die entlang der ersten Führungsschiene läuft (12, 12.1, 12.2).

17. Anlage nach einem Anspruchs 16, **dadurch gekennzeichnet, dass** der erste Kodierer (16, 16.1, 16.2) aus einem magnetischen Kodierer besteht, der von einem Schutzband aus Metall bedeckt ist, das den elektrischen Versorgungsweg bildet (60).

18. Anlage nach einem der Ansprüche 6 bis 15, **dadurch gekennzeichnet, dass** die erste Führungsschiene (12, 12.1, 12.2) mit mindestens einer elektrischen Primärstromwicklung (48, 48.1, 48.2) versehen ist, die so angebracht ist, dass sie elektrischen Strom in mindestens einer sekundären Wicklung (50, 50.1, 50.2) auf die erste mobile Besatzung induzieren kann (14, 14.1, 14.2)und mit der elektronischen Schaltung (53, 53.1) verbunden ist.

## Claims

1. Method for determining and transmitting position information from a movable unit (14) guided along a predetermined fixed linear path, according to which a position signal of the movable unit is acquired with a position sensor (18) integral with the movable unit (14) reading information on an encoder (16) positioned along the predetermined fixed path, **characterised in that** an energising light signal containing position information of the movable unit (14), as a function of the position signal of the movable unit (14), is emitted from a light source (24) associated with the movable unit (14) so as to energise transversely a photoluminescent optical fibre (26) arranged along the path, and **in that** at least one secondary light signal emitted by the photoluminescent optical fibre (26) in response to the energising light signal, and guided in the photoluminescent optical fibre (26) is received via at least one photosensitive cell (36).

2. Method according to the preceding claim, **characterised in that** the energisation signal is a digital signal.

3. Method according to any one of the preceding claims, **characterised in that** the photosensitive cell (36) is positioned at one end of the photoluminescent optical fibre (26) .

4. Method according to any one of the preceding claims, **characterised in that** an amplitude of the signal received at one end of the fibre is measured in order to determine an indicator of communication quality or position data of the movable unit (14).

5. Method according to claim 4, **characterised in that** an absolute position of the movable unit (14) is determined from the position information and the position data of the movable unit (14).

6. Linear guiding facility with one or more axes, comprising at least one first guideway (12, 12.1, 12.2), at least one first movable unit (14, 14.1, 14.2) guided along the first guideway (12, 12.1, 12.2), and at least one first position sensor (18, 18.1, 18.2) rigidly connected to the movable unit (14, 14.1, 14.2), reading at least one first piece of information on a first encoder (16, 16.1, 16.2) rigidly connected to the first guideway (12, 12.1, 12.2), **characterised in that** the facility also comprises at least one first electroluminescent optical fibre (26, 26.1, 26.2) attached to the first guideway (12, 12.1, 12.2), a first light source (24, 24.1, 24.2) attached to the movable unit (14, 14.1, 14.2) and arranged laterally at a distance from the first photoluminescent optical fibre (26, 26.1, 26.2) so as to energise transversely the first photoluminescent optical fibre (26, 26., 26.2), at least one first photosensitive cell (36, 36.1, 36.2) for receiving at least one first secondary light signal emitted by the first photoluminescent optical fibre (26, 26.1, 26.2) in response to the first energising light signal, and guided in the first photoluminescent optical fibre (26, 26.1, 26.2), and a first electronic circuit (53, 53.1) for controlling the first energising light source (24, 24.1, 24.2) and producing the first energising light signal in the form of a digital light signal, wherein the first electronic circuit (53, 53.1) comprises a positioning module (20, 20.1, 20.2) for reading a position signal generated by the position sensor (18, 18.1, 18.2) and a control module (22, 22.1, 22.2) for generating the first energisation signal so that the first energisation signal contains position information in accordance with the position signal.

7. Facility (10) according to claim 6, **characterised in that** the first photosensitive cell (36, 36.1, 36.2) is arranged at one end (34, 34.1, 34.2) of the first photoluminescent optical fibre (26, 26.1, 26.2).

8. Facility according to claim 7, **characterised in that** it comprises an additional first photosensitive cell arranged at the other end of the optical fibre (26, 26.1, 26.2).

9. Facility according to any one of claims 6 to 8, **characterised in that** the first photoluminescent optical fibre (26, 26.1, 26.2) has a circular cross-section.

10. Facility according to any one of claims 6 to 8, **characterised in that** the first photoluminescent optical fibre (26, 26.1, 26.2) has a polygonal cross-section, preferably rectangular or square.

11. Facility according to any one of claims 6 to 10, **characterised in that** the first photoluminescent optical fibre (26, 26.1, 26.2) is arranged in a groove (40) of the first guideway (12, 12.1, 12.2), wherein the groove (40) preferably has one or more reflective walls.

12. Facility according to any one of claims 6 to 10, **characterised in that** the first movable unit (14, 14.1, 14.2) is provided with at least one system (30) for cleaning the optical fibre (26, 26.1, 26.2).

13. Facility according to any one of claims 6 to 12, **characterised in that** the first movable unit (14) is a carriage rolling to-and-fro on the first guideway (12).

14. Facility according to any of claims 6 to 13, **characterised in that** the energising light source (24, 24.1, 24.2) is a light-emitting diode, preferably mounted on the surface of a printed circuit board of the first electronic circuit (53, 53.1) or passing through a printed circuit board of the first electronic circuit (53, 53.1).

15. Facility according to any one of claims 6 to 14, **characterised in that** the position sensor (18, 18.1, 18.2) is a magnetic sensor, preferably including a first tunnel-effect magnetoresistive element.

16. Facility according to any one of claims 6 to 15, **characterised in that** the first movable unit (16, 16.1, 16.2) comprises at least two mobile power supply contacts (62, 64), each connected electrically to the electronic circuit (53, 53.1) and each providing electric contact with a power supply track (58, 60) arranged along the first guideway (12, 12.1, 12.2) .

17. Facility according to claim 16, **characterised in that** the first encoder (16, 16.1, 16.2) is made up of a magnetic encoder covered by a protective metal strip that constitutes the power supply track (60).

18. Facility according to any one of claims 6 to 15, **characterised in that** the first guideway (12, 12.1, 12.2) is provided with at least one primary power supply winding (48, 48.1, 48.2), arranged so as to induce an electric current in at least one secondary winding (50, 50.1, 50.2) arranged on the first movable unit (14, 14.1, 14.2) and connected to the electronic circuit (53, 53.1).
